# EUROPEAN PATENT APPLICATION

(11) **EP 2 562 368 A2**
(43) Date of publication of application: **27.02.2013**
(21) Application number: 12181420.6
(22) Date of filing: 22.08.2012
(51) Int. Cl.: F01D 25/06

(54) **Rotor asymmetry**

(30) Priority: 23.08.2011 US 201113215418
(71) Applicant: United Technologies Corporation, Hartford, CT 06101 (US)
(72) Inventor: Hayford, Richard K., Cape Neddick, ME Maine 03902-7308 (US); Houston, David P., Glastonbury, CT Connecticut 06033 (US); Morris, Robert J., Portland, CT Connecticut 06480 (US)
(74) Representative: Leckey, David Herbert

(57) **Abstract**

A gas turbine engine (10) has a section, such as a compressor section (14), with at least two spaced apart stator assemblies (28) and an asymmetrical rotor assembly (30') positioned between the spaced apart stator assemblies (28). The asymmetrical rotor assembly (30') has a rotor array which is asymmetric about at least one diameter of the rotor assembly (30').

## Description

### BACKGROUND

The present disclosure is directed to an asymmetrical rotor assembly for use in a gas turbine engine.

Rotor wakes and bow waves impinge on the vanes of a stator in a compressor stage of a gas turbine engine. These rotor wakes and bow waves can result in unsteady forcing and high cycle fatigue response. When these unsteady forces couple with the stator structural modeshapes, modal work is performed and vibratory stresses result. The vibratory stresses can be significant enough to result in high cycle fatigue fractures of the vanes in the compressor stators.

In the past, quadrant mistuned rotor assemblies have been proposed to reduce vibratory stresses. These quadrant mistuned rotor assemblies had blades with different thicknesses in different quadrants of the rotor assembly. The mistuned rotor assemblies have been proposed to reduce the structural and aerodynamic coupling of the rotor airfoils within the stage.

### SUMMARY

It is desirable for the compressor section of a gas turbine engine to utilize one or more rotor assemblies which reduce the vibratory stresses on the stator vanes and thus reduce high cycle fatigue risk.

In accordance with the present disclosure, there is provided a gas turbine engine which broadly comprises a section having at least two spaced apart stator assemblies and an asymmetrical rotor assembly positioned between said spaced apart stator assemblies, wherein the asymmetrical rotor assembly has an array of airfoils which is asymmetric about at least one diameter of the rotor assembly.

Further in accordance with the present disclosure, a rotor assembly for use in a gas turbine engine is provided which broadly comprises a rotor array which is asymmetric about at least one diameter of the rotor assembly.

Other details of the rotor asymmetry for stator stress reduction are set forth in the following detailed description and the accompanying drawings, wherein like reference numerals depict like elements.

### BRIEF DESCRIPTION OF THE DRAWINGS

FIG. 1 is a diagrammatic sectional of a gas turbine engine.
FIG. 2 is a diagrammatic view of a high-pressure compressor having a plurality of stages.
FIG. 3 is a front view of an asymmetrical rotor which may be used in the gas turbine engine of FIG. 1.

### DETAILED DESCRIPTION OF THE PREFERRED EMBODIMENT(S)

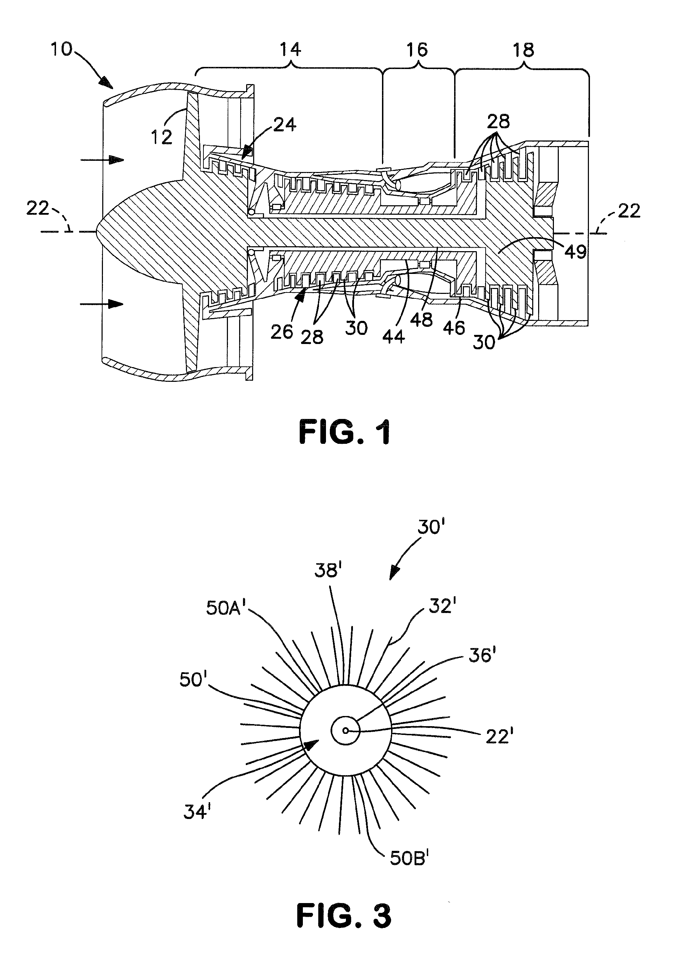

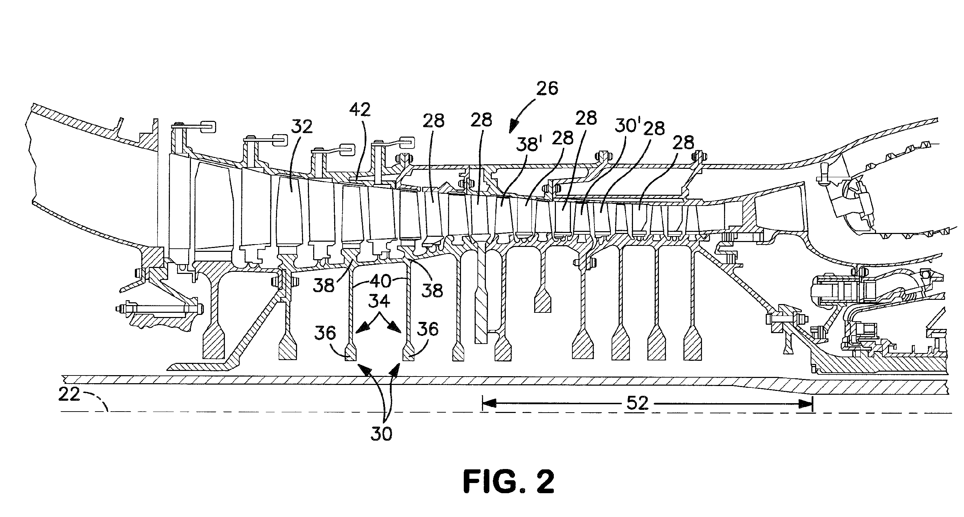

Referring to FIGS. 1 and 2, a gas turbine engine 10 is diagrammatically shown that includes a fan section 12, a compressor section 14, a combustor section 16, and a turbine section 18. The engine 10 has an axially extending centerline 22. Ambient air enters the engine 10 through the fan section 12. The majority of that air subsequently travels through the compressor, combustor, and turbine sections 14, 16, and 18 as core gas flow before exiting through a nozzle.

The compressor 14 may be a single unit or may be sectioned into a low-pressure compressor 24 and a high-pressure compressor 26. The compressor may also be an intermediate compressor of a three-spool engine. Any or all of the compressors, including the low-pressure compressor 24, the high-pressure compressor 26 and/or the intermediate compressor (not shown), may include a plurality of spaced apart stator assemblies 28 and rotor assemblies 30. The stator assemblies 28 may include a plurality of segments, each having one or more stator vanes disposed between an inner platform and an optional outer platform. The segments of each stator assembly 28 collectively form an annular structure that is disposed adjacent a rotor assembly 30. If desired, each stator assembly 28 may be asymmetrical wherein the number of blades on one half of the stator assembly is different in number from the number of blades on a second half of the stator assembly 28. Also, if desired, the vanes of the stator assembly 28 may be cantilevered structures (in which case the outer platform is not present).

Each rotor assembly 30 includes a rotor array formed by a plurality of blades 32 and a disk 34 rotatable around the axially extending centerline 22 of the engine 10. The disk 34 includes a hub 36, a rim 38 defining a circumference 50 for the rotor assembly 30, and a web 40 extending there between. The blades 32 are attached to and extend radially out from the rim 38. Each blade 32 includes a tip 42 that is disposed at a tip angle relative to the axial centerline 22 (i.e. to the centerline of the hub 36) that is greater than zero. The blade tip angle for each blade 32 in a particular rotor assembly 30 is the same for each blade 32 within that rotor assembly 30. Different rotor assemblies 30 however may have different blade tip angles. The rotor assemblies 30, for example within the low-pressure compressor 24, may be mechanically attached to one another and therefore rotate together. The rotor assemblies 30 within the high-pressure compressor 26 may also be mechanically attached to one another and therefore rotate together.

A shaft connects the compressor 14 to the turbine 18. In those embodiments that include a low-pressure compressor 24 and a high-pressure compressor 26, the high-pressure compressor 26 is connected by a first shaft 44 ("HP shaft") to a high-pressure turbine section 46 and the low-pressure compressor 24 is connected by a second shaft 48 ("LP shaft") to a low-pressure turbine section 49.

Referring now to Fig. 3, there is shown an asymmetrical rotor assembly 30' for use in a section of the turbine engine 10 such as a compressor section. The rotor assembly 30' may be an integrally bladed rotor. The rotor assembly 30' may have a disk 34' with a hub 36' which rotates around the centerline 22, a rim 38', a web 40' extending between the hub 36' and the rim 38' and a circumference 50' defined by the rim 38'. The circumference 50' has a first half 50A' and a second half 50B'. A rotor array formed by a plurality of rotor blades 32' are attached to each of the circumference halves 50A' and 50B'. As can be seen from the figure, the number of rotor blades 32' attached to the circumference half 50A' is different from the number of rotor blades 32' attached to the circumference half 50B'. Thus, the rotor array is asymmetric about one or more diameters of all rotor assembly. In one embodiment, 36 blades may be attached to the circumference half 50A' and 32 blades may be attached to the circumference half 50B'. Such a configuration results in a 72E and 64E response on the adjacent stator assembly 28 while maintaining overall stage solidity. It is believed that such an asymmetrical configuration for a rotor assembly results in an approximate 40% reduction in driver strength and vibratory stresses.

The asymmetric rotor assemblies 30' described herein may be located along the length of the compressor section 26. If desired, a plurality of asymmetric rotor assemblies 30' may be located within the compressor section 26. Each asymmetric rotor assembly 30' may be located between two spaced apart stator assemblies 28. As discussed above, the stator assemblies 28 may each be asymmetrical stator assemblies if desired.

The use of asymmetrical rotor assemblies such as that described above, particularly in combination with asymmetrical stator assemblies, change the airfoil blade-to-blade spacing around the stage to break up the relatively strong forcing associated with symmetric rotor assemblies. An advantage of a reduced level of forcing is that it may allow the rotor assembly to be positioned closer to the vanes of the stator assemblies. As a result, overall engine length, cost and weight may be reduced.

Further, the asymmetrical rotor assemblies reduce the rotor driven stresses on adjacent stator vanes. Stress reduction is accomplished by not allowing vibrational energy in the stator assembly to build up and sustain itself over one complete revolution of the rotor assembly. This is due to the asymmetric spacing splitting excitation frequencies. Separating the frequencies distributes the energy in multiple response peaks, with a lower overall stress than in the single frequency symmetric spacing configuration. Further, by reducing the stress on the stator vanes, it is possible to reduce the weight of the stator vanes.

While the asymmetric rotor assemblies set forth herein have been described as being used in a compressor section of a jet engine, it should be recognized that they also could be used in a turbine section of the gas turbine engine or could be used in turbine machinery in general.

There has been described herein a rotor asymmetry. While the rotor asymmetry has been described in the context of specific embodiments thereof, other unforeseen alternatives, modifications, and variations may become apparent to those skilled in the art having read the foregoing description. Accordingly, it is intended to embrace those alternatives, modifications, and variations as fall within the broad scope of the appended claims.

## Claims

1. A rotor assembly (30') for use in a gas turbine engine (10) comprising a rotor array which is asymmetric about at least one diameter of the rotor assembly (30').

2. The rotor assembly of claim 1, wherein said rotor assembly (30') has a circumference with a first half (50A') and a second half (50B') and said rotor array has a first number of blades (32') attached to said first half (50A') and a second number of blades (32') attached to said second half (50B'), and the first number of blades (32') is different in number from said second number of blades (32').

3. The rotor assembly according to claim 2, wherein said assembly comprises a disk (34') having a rim (38') defining said circumference.

4. A rotor assembly according to claim 3, wherein said disk (34') further comprises a hub (36') and a web (40') connecting said hub (36') to said rim (38').

5. A rotor assembly according to any preceding claim, wherein at least one of said blades (32') has a tip (42) that is disposed at a tip angle relative to a centerline (22') of said hub (36') or an engine centerline (22').

6. A rotor assembly according to claim 5, wherein said angle is greater than zero.

7. A rotor assembly according to claim 5 or 6, wherein each said blade (32') has the same blade tip angle.

8. A rotor assembly according to any preceding claim in which the rotor array is asymmetric about a single diameter of the rotor assembly (30').

9. The rotor assembly of any preceding claim, wherein said asymmetrical rotor assembly (30') comprises an integrally bladed rotor.

10. A gas turbine engine (10) comprising:
an engine section having at least two spaced apart stator assemblies (28) and an asymmetrical rotor assembly (30') of any preceding claim positioned between said spaced apart stator assemblies (28).

11. The gas turbine engine of claim 10, wherein said engine section is a compressor section, for example a high pressure compressor section.

12. The gas turbine engine of claim 10 or 11, wherein at least one of said stator assemblies (28) is an asymmetrical stator assembly.

13. The gas turbine engine of any of claims 10 to 12, wherein at least one said stator assemblies (28) is an asymmetrical cantilevered stator assembly (28).

14. The gas turbine engine of any of claims 10 to 13, wherein said engine section has a plurality of said asymmetrical rotor assemblies (30') and each of said asymmetrical rotor assemblies (30') is located between two spaced apart stator assemblies (28).

15. The gas turbine engine of claim 14, wherein each of said asymmetrical rotor assemblies (30') has said circumference with said first half (50A') and said second half (50B') and said first number of blades (32') attached to said first half (50A') and said second number of blades (32') attached to said second half (50B'), and the first number of blades (32') is different from said second number of blades (32').
